# EUROPEAN PATENT APPLICATION

(11) **EP 1 207 321 A2**
(43) Date of publication of application: **22.05.2002**
(21) Application number: 01309652.4
(22) Date of filing: 15.11.2001
(51) Int. Cl.: F16H 61/22, F16H 59/10

(54) **Locking apparatus for shift lever**

(30) Priority: 16.11.2000 US 713856
(71) Applicant: Saia-Burgess Inc., Vandalia, Ohio 45377 (US)
(72) Inventor: Brooks, Robert B Jr., Centerville, Ohio 45458 (US)
(74) Representative: Finnie, Peter John

(57) **Abstract**

An apparatus prevents movement of a vehicle shift lever (20) out of a park position prior to actuation of vehicle brakes and prevents movement of the shift lever (20) from a drive position to a reverse position when the vehicle is being operated at a speed above a predetermined speed. An actuator (106) holds a blocking member (104) in a position blocking movement of a detent (58) from a park detent location (64) when the shift lever (20) is in the park position and the vehicle brakes are in an unactuated condition. The actuator (106) also holds the blocking member in a position blocking movement of the detent (104) from a (66) drive detent location (74) to a reverse detent location when the shift lever (20) is in the drive position and the vehicle is being operated at a speed greater than the predetermined speed.

## Description

### Field of the Invention

The present invention relates to a shift lever control apparatus which is effective to control movement of a shift lever from a park position and/or is effective to control movement of a shift lever from a drive position to a reverse position during operation of a vehicle.

### Background to the Invention

Automotive vehicles may include a feature which prevents movement of a shift lever from a park position prior to actuation of vehicle brakes. Automotive vehicles may also include a feature which prevents a shift lever from being moved into reverse when the vehicle is moving forward at a speed above a predetermined speed, for example, six miles per hour.

These features have been provided by separate devices. These features may include a push type solenoid actuator which moves a blocking device relative to the shift lever. The solenoid actuator may be energized when the vehicle reaches a threshold speed to prevent the shifter from being able to move into the reverse position.

Although the known devices may result in fully functional operation, there are several inherent and undesirable issues present with at least some known devices. Specifically, noise may be associated with movement of an actuator and/or blocking device as a result of end-of-travel impact and/or actuation noise. This noise is objectionable because it is present and noticeable and because it occurs at a predetermined speed, not as a result of a driver's physical activity, such as moving a lever or squeezing a button.

With some known shift lever control systems, when a driver tries to shift into reverse during operation of the vehicle at a speed above a predetermined speed, the shift lever becomes obstructed by a blocking member. The blocking member remains in place even after the vehicle speed drops below the predetermined speed. Friction between the blocking member and other components of the system may prevent the blocking feature from being disengaged. To enable the shift lever to be moved into reverse, the vehicle operator must first shift back to neutral or drive and allow the blocking feature to disengage. Once this occurs, the operator can shift into reverse.

As was mentioned, some known shift lever control systems utilize a push type solenoid-type actuator. The solenoid actuator is energized to move a member when a predetermined vehicle operating speed is reached. The solenoid actuator is subsequently de-energized when the vehicle speed drops below the predetermined speed. During operation of a vehicle in an urban environment, the vehicle speed may repeatedly vary between speeds which are above and below the predetermined operating speed at which the solenoid is energized and de-energized. The resulting high number of operating cycles increases the need for the solenoid to be constructed so as to be very durable.

### Summary of the Invention

The present invention relates to a new and improved apparatus which may have a feature which prevents manual movement of a shift lever out of a park position prior to actuation of vehicle brakes. The apparatus may also have a feature which prevents manual movement of the vehicle shift lever from a drive position to a reverse position when the vehicle is being operated at a speed above a predetermined speed. Although the two features may advantageously be utilized together, it is contemplated that each of these features may be utilized separately. Specifically, it is believed that the apparatus may be used to prevent movement of a vehicle shift lever from the drive position to a reverse position when the vehicle is being operated at a speed above a predetermined speed without being utilized to prevent movement of the vehicle shift lever out of a park position prior to actuation of the vehicle brakes. Of course, the apparatus could be utilized to prevent movement of the vehicle shift lever out of the park position prior to actuation of the vehicle brakes without being used to prevent movement of the vehicle shift lever from the drive position to the reverse position when the vehicle is being operated at a speed above the predetermined speed.

The apparatus may include an actuator which is connected with a blocking member. When the vehicle shift lever is in the park position and the vehicle brakes are in an unactuated condition, the actuator may be effective to hold the blocking member in a position which prevents movement of a detent from a park detent location. When the shift lever is in a drive position and the vehicle is being operated at a speed which is greater than a predetermined speed, the actuator may hold the blocking member in a position blocking movement of the detent from a drive detent location to a reverse detent location.

### Brief Description of the Drawings

Examples of the present invention will now be described in detail with reference to the accompanying drawings, in which:
Fig. 1 is a schematic illustration of a manually movable vehicle shift lever and a control apparatus which is utilized in association with the shift lever, the shift lever being illustrated in Fig. 1 in a park position;
Fig. 2 is an enlarged schematic sectional view of an actuator assembly which forms part of the control apparatus of Fig. 1;
Fig. 3 is a sectional view, generally similar to Fig. 2, illustrating the position to which an armature of the actuator assembly is moved under the influence of force transmitted from the vehicle shift lever during movement of the shift lever between park, reverse, and drive positions;
Fig. 4 is a schematic illustration of control circuitry which is utilized in association with the actuator assembly of Figs. 2 and 3;
Fig. 5 is a schematic illustration depicting the manner in which the shift lever is moved from the park position to an intermediate position between the park and reverse positions;
Fig. 6 is a schematic illustration, generally similar to Fig. 5, illustrating the vehicle shift lever in a reverse position;
Fig. 7 is a schematic illustration, generally similar to Figs. 5 and 6, illustrating the vehicle shift lever in a neutral position;
Fig. 8 is a schematic illustration, generally similar to Figs. 5-7, illustrating the vehicle shift lever in a drive position;
Fig. 9 is a schematic illustration, generally similar to Figs. 5-8, illustrating the vehicle shift lever in a second drive position;
Fig. 10 is a schematic illustration of a second embodiment of the control apparatus which is associated with a shift lever, the shift lever being illustrated in a park position;
Fig. 11 is a schematic illustration, generally similar to Fig. 10, illustrating the shift lever in a reverse position; and,
Fig. 12 is a schematic illustration of a third embodiment of control apparatus which is associated with a shift lever, the shift lever being shown in a park position.

### Detailed Description

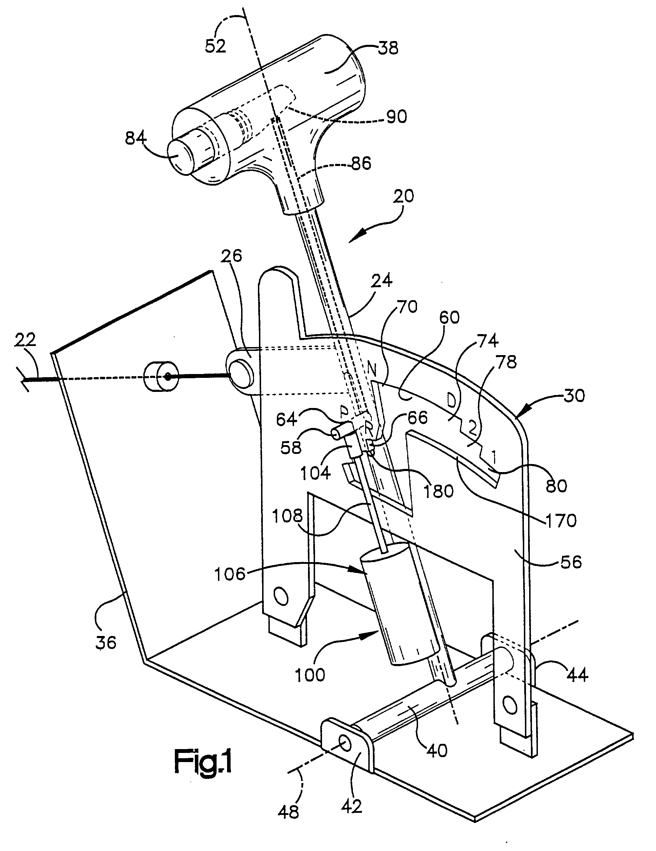

A vehicle shift lever assembly 20 (Fig. 1) is manually movable to select the operating condition of an automatic transmission of an automotive vehicle. The shift lever assembly 20 is connected with the automatic transmission by a cable 22. The cable 22 is connected with a lever portion 24 of the shift lever assembly 20 by a bracket 26. The shift lever assembly 20 is manually movable between a plurality of positions to move the cable 22 to select the operating condition of the automatic transmission.

A detent assembly 30 cooperates with the shift lever assembly 20 to indicate to an operator when the shift lever assembly is in a desired one of a plurality of operating positions. Thus, the detent assembly 30 indicates to the operator of the vehicle when the shift lever is in the park, reverse, neutral, or any one of the three drive positions.

The shift lever assembly 20 is pivotally mounted on a base 36. The shift lever assembly 20 includes a handle portion 38 which is connected with a mounting portion 40 by the lever portion 24. The mounting portion 40 of the shift lever assembly 20 is pivotally supported on a pair of upstanding flanges 42 and 44 on the base 36. The mounting portion 40 is supported for pivotal movement about an axis 48 which extends perpendicular to a longitudinal central axis 52 of the shift lever assembly 20.

The detent assembly 30 includes a detent plate 56 having major side surfaces which extend parallel to the central axis 52 of the vehicle shift lever assembly 20 and perpendicular to the axis 48 about which the vehicle shift lever assembly is pivotal. The detent plate 56 includes a plurality of detent locations corresponding to the positions of the vehicle shift lever assembly 20. A detent member 58 connected with the vehicle shift lever 20 extends into an opening 60 formed in the detent plate 56. The detent member 58 is movable to detent locations which correspond to the various positions of the vehicle shift lever assembly 20.

The detent locations associated with the detent plate 56 include a park detent location 64 which is designated by the letter "P" on the detent plate 56 in Fig. 1. When the vehicle shift lever assembly 20 is in the park position, the detent member 58 is at the park detent location 64 in the manner indicated schematically in Fig. 1. At this time, the cable 22 has effected operation of the vehicle transmission to a locked condition in which a drive train of the vehicle is locked against movement.

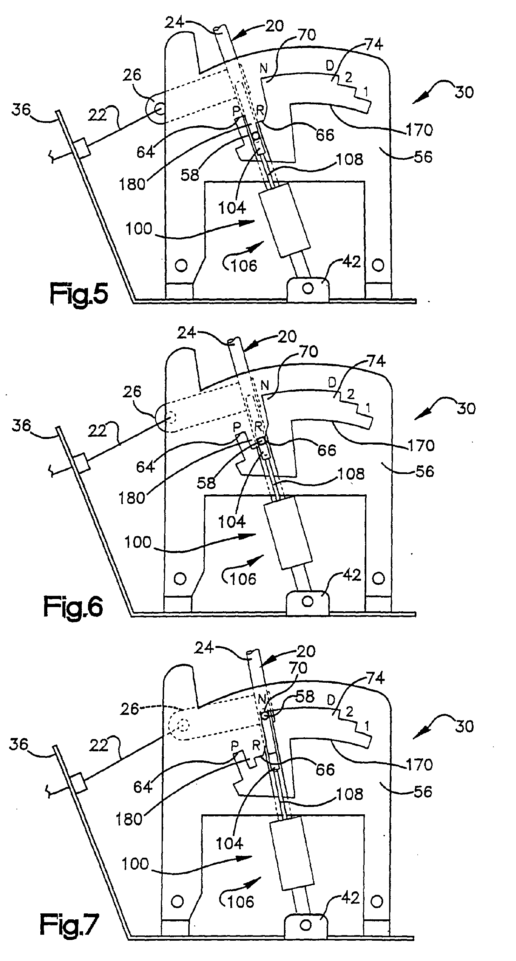

The detent locations associated with the detent plate 56 also include a reverse detent location 66 which is designated by the letter "R" on the detent plate. When the vehicle shift lever 20 is in the reverse position, the detent member 58 is at the reverse detent location 66 in the manner indicated schematically in Fig. 6. At this time, the cable 22 has caused operation of the vehicle transmission to a condition in which it is effective to transmit force to drive the vehicle in a reverse or backward direction.

The detent locations associated with the detent plate 56 also include a neutral detent location 70 which is designated by the letter "N" on the detent plate. When the vehicle shift lever 20 is in the neutral position, the detent member 58 is at the neutral detent location 70 in the manner indicated schematically in Fig. 7. At this time, the cable 22 has effected operation of the vehicle transmission to a condition in which the transmission is ineffective to transmit drive force between an engine and wheels of the vehicle.

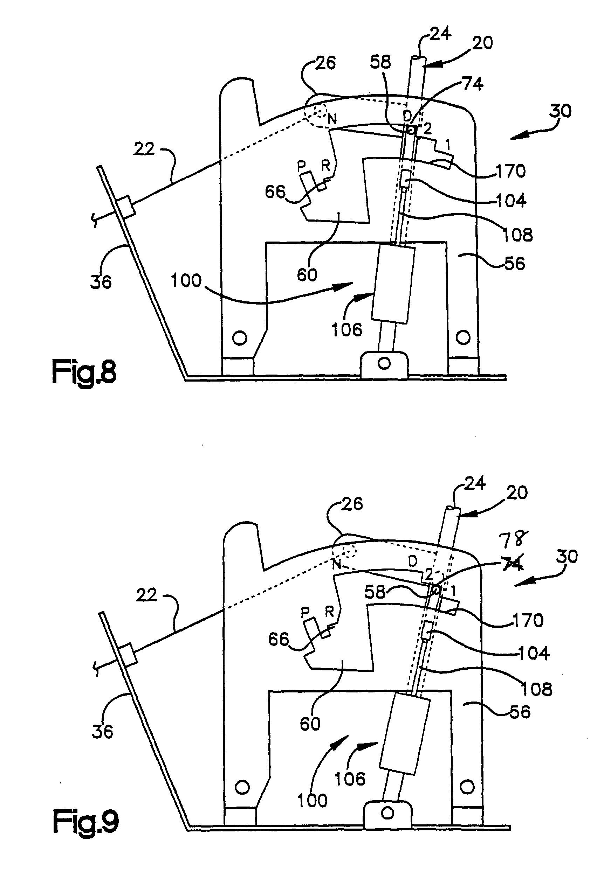

The detent locations defined by the detent plate 56 also include a drive detent location 74 which is designated by the letter "D" on the detent plate. When the vehicle shift lever 20 is in the drive position, the detent member 58 is at the drive detent location 74 in the manner indicated schematically in Fig. 8. At this time, the cable 22 has effected operation of the vehicle transmission to a condition in which the transmission is capable is transmitting force through a full forward operating range of the vehicle.

The detent locations associated with the detent plate 56 also include a second drive detent location 78 which is designated by the numeral "2" on the detent plate. When the vehicle shift lever 20 is in the second drive position, the detent member 58 is at the second drive detent location 78 in the manner indicated schematically in Fig. 9. At this time, the cable 22 has effected operation of the vehicle transmission to a condition in which the vehicle transmission is effective to transmit force through either a first range or a second range of the transmission.

The detent locations associated with the detent plate 56 also include a first drive detent location 80 which is designated by the numeral "1" on the detent plate 56 in Fig. 1. When the vehicle shift lever 20 is in the first drive position, the detent member 58 is at the detent location 80. At this time, the cable 22 has effected operation of the transmission to a condition in which it is effective to only transmit force through a low operating range of the transmission.

The detent member 58 is movable relative to the vehicle shift lever assembly 20 between an engaged position and a release position. When the detent member 56 is in the engaged position, the detent member engages the detent plate 56 at one of the detent locations 58, 66, 70, 74, 78, or 80. When the detent member 58 is in a disengaged condition, the detent member is spaced from the detent locations 64, 66, 70, 74, 78 and 80. For example, the detent member 58 is illustrated in Fig. 5 in a release position in which the detent member is disposed between the park detent location 64 and reverse detent location 66.

The vehicle shift lever assembly 20 (Fig. 1) includes manually actuatable pushbutton 84 disposed on the handle portion 38 of the vehicle shift lever assembly. An actuator rod 86 extends along the vehicle shift lever 20 and is fixedly connected with the detent member 58. An upper end of the actuator rod 86 is engaged by a cam surface 90 connected with the pushbutton 84.

When the pushbutton 84 is manually depressed, the cam surface 90 moves the actuator rod 86 downward (as viewed in Fig. 1) against the influence of a biasing spring (not shown). This downward movement of the actuator rod 86 is effective to move the detent member 58 from an engaged condition in which the detent member is disposed in engagement with the detent plate 56 at one of the detent locations 64, 66, 70, 74, 78, or 80 and a release condition in which the detent member 58 is spaced from the detent locations.

The vehicle shift lever assembly 20 and detent assembly 30 have a construction which has been indicated schematically in Fig. 1. It is contemplated that the vehicle shift lever assembly 20 and the detent assembly 30 may have a construction which is similar to the construction disclosed in U.S. Patents Nos. 4,887,702; 5,251,723; 5,489,246; and/or 5,938,562. The disclosures in the aforementioned patents are hereby incorporated herein in their entirety by this reference thereto. Although the shift lever assembly 20 is of the floor or console mounted type, it is contemplated that the shift lever assembly could be constructed so as to be steering column mounted.

A control apparatus 100 is provided to: (1) prevent manual movement of the vehicle shift lever assembly 20 from the park position (Fig. 1) prior to actuation of a vehicles brakes, and (2) prevent manual movement of the vehicle shift lever assembly from the drive position (Fig. 8) to the reverse position (Fig. 6) when the vehicle is being operated at a speed above a predetermined speed. Although it is preferred to use the control apparatus 100 to perform both of the foregoing functions, the control apparatus could be used to perform only one of the functions without the other function. For example, the control apparatus 100 could be constructed so as to only prevent manual movement of the vehicle shift lever assembly 20 from the park position prior to actuation of vehicle brakes. Alternatively, the control apparatus 100 could be constructed so as to only prevent manual movement of the vehicle shift lever assembly 20 from the drive position to the reverse position when the vehicle is being operated at a speed above a predetermined speed.

The control apparatus 100 (Fig. 1) includes a blocking member 104 and an actuator 106. The actuator 106 is connected with the blocking member 104 by an actuator rod 108. The actuator 106 and blocking member 104 are connected with the vehicle shift lever assembly 20 and move with the vehicle shift lever assembly relative to the detent plate 56.

The actuator 106 holds the blocking member 104 in position blocking movement of the detent member 58 from the park detent location 64 when the shift lever assembly 20 is in the park position and the vehicle brakes are in an unactuated condition with the vehicle ignition actuated. Thus, when the vehicle shift lever assembly 20 is in the park position illustrated in Fig. 1 with the ignition switch actuated and the vehicle brakes in an unactuated condition, the actuator 106 is effective to hold the blocking member 104 in the blocking position illustrated in Fig. 1. At this time, the blocking member 104 is disposed in engagement with the detent member 58 and the detent member is disposed in engagement with the detent plate 56.

If an attempt is made to manually actuate the pushbutton 84 (Fig. 1) with the thumb of an operator of the vehicle, force applied against the pushbutton is transmitted from the cam surface 90 to the actuator rod 86. The detent member 58 is fixedly connected to the actuator rod 86. Therefore, force is transmitted from a cylindrical outer side surface of the detent member 58 to the blocking member 104. The force is transmitted from the blocking member 104 through the actuator rod to the actuator 106.

When the shift lever assembly 20 is in the park position (Fig. 1) with the vehicle brakes in an unactuated condition, the actuator 106 holds the blocking member 104 in the blocking position illustrated in Fig. 1 to block movement of the detent member 58 from the park detent location 64. Therefore, force applied against the pushbutton 84 by the thumb of the operator of the vehicle will be ineffective to move the actuator rod 86 and effect movement of the detent member 58 from the park detent location 64.

Upon actuation of the vehicle brakes with the ignition switch actuated and the vehicle shift lever assembly 20 in the park position illustrated in Fig. 1, the actuator 106 is rendered ineffective to hold the blocking member 104 in the blocking position illustrated in Fig. 1 against the influence of manual force applied against the pushbutton 84 and transmitted through the actuator rod 86. Therefore, when the vehicle brakes are actuated, the operator may depress the pushbutton 84 under the influence of force transmitted from the thumb of the operator to the pushbutton. This causes the cam surface 90 to move toward the right (as viewed in Fig. 1) and to press the actuator rod 86 downward. Force is transmitted from the actuator rod 86 through the detent member 58 to the blocking member 104.

At this time, the actuator 106 is ineffective to hold the blocking member 104 against the force which is manually applied to the pushbutton 84. Therefore, the detent member 58 and blocking member 104 can be moved downward (as viewed in Fig. 1) toward the actuator 106 by the actuator rod 86. This releases the vehicle shift lever assembly 20 for clockwise pivotal movement from the park position (Fig. 1) through the intermediate position (Fig. 5) to the reverse position (Fig. 6)

The shift lever assembly 20 is movable from the reverse position of Fig. 6 through the neutral position of Fig. 7 to the drive position of Fig. 8. Movement of the shift lever assembly 20 may be interrupted with the shift lever assembly in the drive position of Fig. 8 and the detent member 58 in engagement with the drive detent location 74 if desired.

Alternatively, pivotal movement of the vehicle shift lever assembly 20 may be continued to move the vehicle shift lever assembly 20 to a second drive position illustrated in Fig. 9 in which the detent member 58 is at the second drive detent location 78. If desired, the pivotal movement of the vehicle shift lever 24 could be continued to move the vehicle shift lever assembly 20 to the first drive position.

When the vehicle shift lever assembly 20 is in any one of the drive positions and the vehicle is being operated in a forward direction at a speed above a predetermined speed, for example six miles per hour, the actuator 106 is effective to hold the blocking member 104 in a position blocking movement of the detent member 58 to the reverse detent location 66. This prevents the automatic transmission connected with the cable 22 from being operated from a forward drive condition to a reverse drive condition when the vehicle is moving forward at a speed above the predetermined speed.

The two features of preventing movement of the vehicle shift lever assembly 20 from the park position when the vehicle brakes are in an unactuated condition and preventing movement of the vehicle shift lever assembly from a drive position to the reverse position which the vehicle is operating at a speed above a predetermined speed can be utilized separately. It is believed that the features will advantageously be utilized together. However, either one of the two features could be utilized separately from the other feature. Thus, the actuator 106 could be utilized to hold the blocking member 104 in a position blocking movement of the detent member 58 out of the park detent location when the vehicle brakes are in an unactuated condition without the feature of blocking movement of the vehicle shift lever assembly 20 from the drive position to the reverse position. Similarly, the feature of preventing movement of the vehicle shift lever assembly 20 from the drive position to the reverse position when the vehicle is being operated at a speed above a predetermined speed, may be utilized without the feature of preventing movement of the vehicle shift lever assembly from the park position when the brakes are in an unactuated condition.

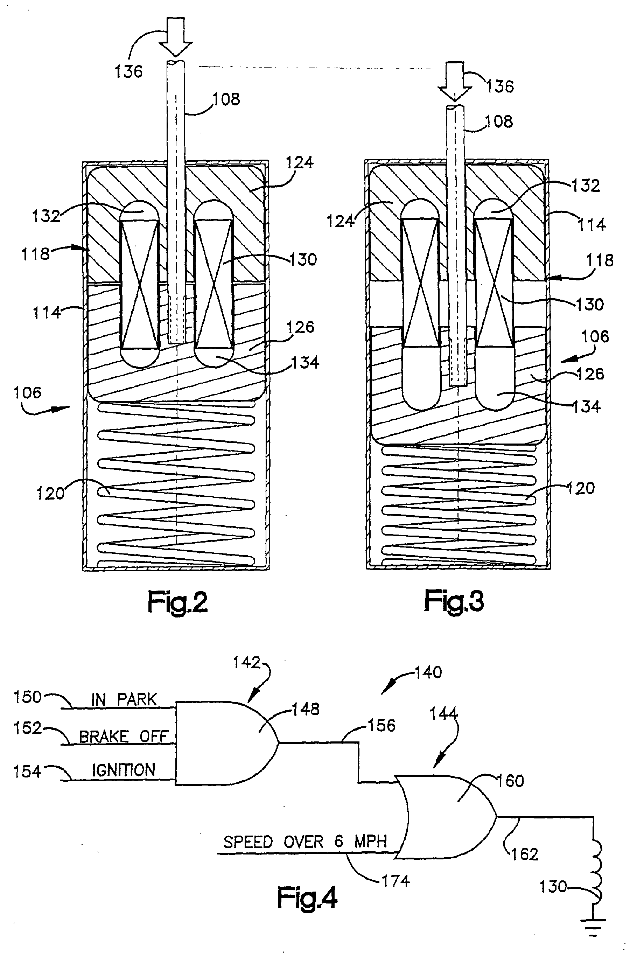

The construction of the actuator 106 is illustrated in Figs. 2 and 3. The actuator 106 includes a cylindrical housing 114 (Figs. 2 and 3). The housing 114 encloses an electromagnet 118 and a biasing spring 120.

The electromagnet 118 includes a cylindrical pole piece 124 which is fixedly connected with the housing 114. In addition, the electromagnet includes a cylindrical armature 126 which is axially movable relative to the housing 114. The armature 126 is constantly urged toward the pole piece 124 by the biasing spring 120.

The biasing spring 120 is a helical coil spring. However, the biasing spring 120 could have a different construction if desired. For example, the biasing spring 120 could be formed by a plurality of spring washers of the "Belleville" (trademark) type. Alternatively, the biasing spring 120 could be either a leaf spring or a spiral spring.

A cylindrical coil 130 is disposed in annular recesses 132 and 134 in the pole piece 124 and armature 126. When the coil 130 is energized, it provides a relatively strong magnetic field which is effective to hold the armature 126 in abutting engagement with the pole piece 124 against the influence of force, indicated schematically by an arrow 136, transmitted through the actuator rod 108 to the armature 126. When the coil 130 is de-energized, the force, indicated by the arrow 136 in Fig. 3, is effective to move the armature 126 away from the pole piece 124. Upon energization of the coil 130, the magnetic field provided by the coil assists the biasing spring 120 in urging the armature 126 toward the pole piece 124 to move the armature to the position illustrated in Fig. 2 against the influence of the force 136.

The illustrated actuator 106 has a known construction which is the same as is disclosed in U.S. Patent No. 4,812,884. The disclosure in the aforementioned U.S. Patent No. 4,812,884 is hereby incorporated herein in its entirety by this reference thereto. Although it is believed that the construction of the actuator 106 may be particularly advantageous, it should be understood that the actuator 106 could have a different construction if desired.

Control circuitry 140 (Fig. 4) is connected with the coil 130 of the actuator 106. The control circuitry 140 includes brake/transmission shift interlock circuitry 142 and reverse lock circuitry 144. The brake/transmission shift interlock circuitry 142 effects energization of the coil 130 to prevent movement of the vehicle shift lever assembly 20 from the park position when the vehicle ignition is actuated and the vehicle brakes are in an unactuated condition. The reverse lock circuitry 144 effects energization of coil 130 to prevent movement of the vehicle shift lever assembly 20 from a drive position when the vehicle is being operated at a speed which is greater than a predetermined speed.

In the embodiment of the invention illustrated in Fig. 4, the predetermined speed at which the vehicle shift lever assembly can not be moved from the drive position (Fig. 8 or Fig. 9) to the reverse position (Fig. 6) was selected as being six miles per hour. However, it should be understood that the predetermined speed could be either more than or less than six miles per hour if desired. For example, the predetermined speed at which the reverse lock circuitry 144 effects energization of the coil 130 could be at a speed of either eight miles per hour or four miles per hour.

The brake/transmission interlock circuitry 142 includes an AND gate 148. The AND gate 148 receives a positive input from a detector over a lead 150 when the vehicle shift lever assembly 20 is in the park position. As soon as the vehicle shift lever assembly is moved from the park position, the positive input over the lead 150 is interrupted.

In addition, the AND gate 148 receives a positive input over a lead 152 when the vehicle brakes are in an unactuated condition. As soon as the vehicle brakes are actuated, the positive input over the lead 152 is interrupted.

The AND gate 148 also receives a positive input over a lead 154 when the vehicle ignition is in an actuated condition, that is, an ON condition. As soon as the ignition is turned OFF, that is, in an unactuated condition, the positive input over the lead 154 is interrupted.

When positive inputs are provided over the leads 150, 152 and 154 to the AND gate 148, the AND gate has a positive output. Thus, the AND gate 148 has a positive output when the vehicle shift lever assembly 20 is in the park position, the vehicle brakes are in an unactuated condition, and the vehicle ignition has been turned on. If any one of these conditions is not present, the positive output from the AND gate is interrupted. For example, when the vehicle brakes are actuated, the output from the AND gate 148 goes negative.

The output from the AND gate 148 is conducted over a lead 156 to an OR gate 160. The OR gate 160 is connected with the coil 130 in the actuator 106 by a lead 162. Therefore, when there is a positive output from the AND gate 148, the coil 130 is energized by the output from the OR gate 160.

Immediately prior to energization of the coil 130, the armature 126 is held in the position illustrated in Fig. 2 in engagement with the pole piece 124. When the coil 130 is energized, the armature 126 continues to be held in the position illustrated in Fig. 2 in engagement with the pole piece 124. The armature 126 is held in the position illustrated in Fig. 2 in engagement with the pole piece 124 under the combined influence of the biasing spring 120 and a magnetic field from the energized coil 130.

The strength of the magnetic field from the coil 130 is sufficient to hold, the actuator rod 108 against movement under the influence of the force 136. Therefore, the blocking member 104 is maintained in the position illustrated in Fig. 1 blocking movement of the detent member 58 from the park detent location 64. Since the actuator rod 86 in the vehicle shift lever assembly 20 (Fig. 1) is fixedly connected with the detent member 58, the vehicle shift lever assembly 20 can not be moved out of the park position even though the operator of the vehicle manually presses against the push button 84.

When the positive output from the AND gate 148 is interrupted due to interruption of the positive inputs over one of the leads 150, 152 or 154, the positive output from the OR gate 160 to effect energization of the coil 130 is also interrupted. When the coil 130 is de-energized, the armature 126 is urged toward the pole piece 124 under the influence of only the biasing spring 120.

As this occurs, force transmitted from the pushbutton 84 (Fig. 1) on the handle portion 38 of the vehicle shift lever assembly 20 is effective to move the detent member 58 downward (as viewed in Fig. 1). At this time, the force 136 applied against the actuator rod 108 is effective to move the armature 126 away from the pole piece 124 to the position illustrated in Fig. 3. This releases the vehicle shift lever assembly 20 for movement from the park position illustrated in Fig. 1 through the intermediate position of Fig. 5 to the reverse detent position 66, or the neutral detent position 70, or one of the drive detent positions 74, 78 or 80.

Once the vehicle shift lever assembly 20 has been moved from the park position, the positive input over the lead 150 is interrupted and there is a negative output from the AND gate 148. When the vehicle shift lever assembly 20 has been moved to the drive position (Fig. 8), the vehicle is operated in a forward direction. During forward operation of the vehicle, the armature 126 in the actuator 106 is held in engagement with the pole piece 124 by the biasing spring 120 (Fig. 2) At this time, the force 136 has been interrupted so that the force is not transmitted through the actuator rod 108 to urge the armature 126 away from the pole piece 124.

If the operator of the vehicle wishes to change from a forward direction to a reverse direction, the operator may apply force against the pushbutton 84 and move the actuator rod 86 downward (as viewed in Figs. 1 and 8). This results in the detent member 58 being moved downward toward the blocking member 104 (Fig. 8). However, the opening 60 in the detent plate 56 is configured so that a blocking surface 170 on the detent plate is disposed between the detent member 58 and the blocking member 104. Therefore, manual actuation of the pushbutton 84 is effective to move the detent member 58 into engagement with the blocking surface 170. The detent member 58 does not move into engagement with the blocking member 104. Therefore, force is not transmitted through the actuator rod 108 to the blocking member 104.

Assuming that the pushbutton 84 has been manually actuated by the operator and that the operator desires to move the vehicle shift lever assembly 20 from the drive position of Fig. 8 to the reverse position of Fig. 6, the operator will manually apply force to the handle portion 38 of the vehicle shift lever assembly 20 to pull the shift lever assembly in a counterclockwise direction about the axis 48 (Fig. 1). As this occurs, the detent member 58 will be maintained in engagement with the blocking surface 170 by force manually applied against the pushbutton 84 by the thumb of the operator.

The actuator 106 is connected with the vehicle shift lever assembly 20. The blocking member 104 and actuator rod 108 are also connected with the vehicle shift lever assembly 20 through the actuator 106. Therefore, as the vehicle shift lever assembly 20 moves from the drive position of Fig. 8 toward the reverse position of Fig. 6, the actuator 106, actuator rod 108, and blocking member 104 move with the vehicle shift lever assembly 20. Thus, the vehicle shift lever assembly 20, actuator 106 and blocking member 104 all pivot in a counterclockwise direction about the axis 48 as the operator moves the vehicle shift lever assembly 20 from the drive position of Fig. 8 toward the reverse position of Fig. 6.

As the operator moves the vehicle shift lever assembly 20 from the drive position toward the reverse position, the detent member 58 slides along the blocking surface 170 on the detent plate 56. When the detent member 58 moves clear of the left (as viewed in Fig. 8) end of the blocking surface 170, the detent member is released for downward movement into engagement with the blocking member 104. When the detent member 58 engages the blocking member 104, the force 136 is again transmitted to the actuator rod 108.

If the vehicle is travelling forward at a speed which is less than the predetermined speed, the force 136 transmitted from the detent member 58 through the blocking member 104 and actuator rod 108 to the armature 126 is effective to move the armature away from the pole piece 124. As this occurs, the detent member 58 can be moved into the reverse detent location 66 in the manner illustrated in Fig. 6.

However, if the vehicle is travelling forward at a speed greater than the predetermined speed, in the example set forth herein, at a speed greater than six miles per hour, a positive input is provided to the OR gate 160 over a lead 174 (Fig. 4). The positive input over the lead 174 originates from a vehicle speed sensor and is maintained as long as the vehicle speed is above the predetermined speed. As soon as the vehicle speed drops below the predetermined speed, the positive input over the lead 174 is interrupted.

Assuming that the vehicle is travelling at a speed which is greater than the predetermined speed, that is at a speed which is greater than six miles per hour, there is a positive input over the lead 174 to the OR gate 160. This results in a positive output from the OR gate 160 over the lead 162 to the coil 130. The output from the OR gate 160 energizes the coil 130 to provide a magnetic field which strongly urges the armature 126 toward the pole piece 124.

When the vehicle is moving forward at a speed which is above the predetermined speed, the coil 130 is energized. As the vehicle speed increases from a speed below the predetermined speed to a speed above the predetermined speed, the armature 126 is maintained in engagement with the pole piece 124 by the biasing spring 120. Therefore, when the coil 130 becomes energized, there is no relative movement between the armature 126 and the pole piece 124. The lack of relative movement between components of the actuator 106 minimizes objectionable noise. Since the armature is in the position illustrated in Fig. 2 when the vehicle speed exceeds the predetermined speed and the coil is energized, there is no objectionable noise from the actuator 106 as the coil 130 is energized.

The combined influence of the biasing spring 120 and the magnetic field from the coil 130 prevents the armature 126 from moving away from the pole piece 124. Therefore, the actuator rod 108 and blocking member 104 can not move downward relative to the shift lever assembly 20. The actuator 106 holds the blocking member 104 in a position blocking movement of the detent member 58 to the reverse detent location 66. This prevents the vehicle shift lever assembly 20 from being moved to the reverse position of Fig. 6.

When the vehicle speed drops below the predetermined speed, that is, below six miles per hour, the positive input over the lead 174 to the OR gate 160 is interrupted. This results in the coil 130 being de-energized. De-energization of the coil 130 substantially reduces the force required to move the armature 126 away from the pole piece 124.

When the coil 130 is de-energized, the force transmitted from the detent member 58 through the blocking member 104 and actuator rod 108 is effective to move the blocking member 104 and actuator rod downward to enable the detent member to move into the reverse detent location 66. After the vehicle shift lever assembly 20 has been moved out of the park position, the coil 130 is maintained in a de-energized condition until the vehicle speed exceeds a predetermined speed.

As the vehicle shift lever assembly 20 is moved from the drive position to the reverse position while the vehicle is travelling at a speed which is less than the predetermined speed or is stopped, the blocking member 104 is moved downward toward the pivot axis 48 (Fig. 1) along a path which extends parallel to the central axis 52 of the vehicle shift lever assembly. Once the detent member 58 has engaged the blocking member 104, there is no relative movement between the detent member and the blocking member. This minimizes frictional forces which must be overcome by the manual pressure applied against the pushbutton to effect movement of the blocking member 104 to a position which is ineffective to block movement of the detent member 58 to the reverse detent location.

The operating life of the actuator 106 is promoted by the fact that there is relative movement between the armature 126 and pole piece 124 only when the coil 130 is de-energized. When the coil 130 is de-energized, the armature 126 is moved by force transmitted from the detent member 58 through the blocking member 104 to the actuator 106. When the armature 126 is moved back toward the pole piece 124, this movement occurs under the influence of only the biasing spring 120. The force applied by the biasing spring against the components of the electromagnet 118 is relatively low, compared to the force applied to the components of the electromagnet by the coil 130. This results in relatively low stress levels in the components of the electromagnet 118 during operation of the electromagnet.

When the condition of the coil 130 is changed from a de-energized condition to an energized condition, there is no relative movement between the armature 126 and pole piece 124. In addition to eliminating noise, this also increases the service life of the electromagnet. Thus, when the coil 130 is energized, the armature 126 is merely pressed against the pole piece with a force which increases from the relatively low force provided by the biasing spring 120 to a higher force provided by the combined influence of the biasing spring and the coil.

The blocking member 104 and detent 58 are both moved in the same direction under the influence of force transmitted from the pushbutton 84 through the actuator rod 86 to the detent member 58 when the coil 130 is de-energized. This minimizes relative movement between the detent member 58 and blocking member 104. By minimizing relative movement between the detent member 58 and blocking member 104, friction forces opposing movement of the detent member are also minimized.

If a driver attempts to move the vehicle shift lever assembly 20 from a drive position (Fig. 8) to a reverse position (Fig. 6) while the vehicle speed is decreasing from a speed above the predetermined speed to a speed below the predetermined speed, the blocking member 104 is engaged by the detent member 58 to block movement of the detent member to the reverse detent location 66. As soon as the vehicle speed drops below the predetermined speed and the coil 130 is de-energized, the force applied by the detent member 58 to the blocking member moves the blocking member and detent member together to enable the detent member to move into the reverse detent location. At this time, there is no relative movement between the detent member 58 and blocking member 104. Therefore, there are minimal friction forces to oppose movement of the detent member to the reverse detent location 66.

Upon initiation of operation of the vehicle, the vehicle shift lever assembly 20 is in the park position illustrated in Fig. 1 and the coil 130 is de-energized. At this time, the armature 126 is pressed against the pole piece 124 by the biasing spring 120.

To begin operation of the vehicle, the operator actuates the ignition switch to an ON condition with a resulting positive input over the lead 154 to the AND gate 148. At this time, the vehicle brakes are in an unactuated condition so that there is a positive input over the lead 152 to the AND gate 148. Since the shift lever assembly 20 is in the park position of Fig. 1, there is a positive input to the AND gate 148 over the lead 150. The resulting positive output from the AND gate 148 to the OR gate 160 effects energization of the coil 130.

Since the armature 126 is already being pressed against the pole piece 124 by the coil spring 120, there is no relative movement between the components of the electromagnet 118 when the coil 130 is energized. The lack of relative movement between the components of the electromagnet tends to increase the operating life of the electromagnet. In addition, since energization of the coil 130 merely results in an increase in the force with which the armature 126 is pressed against the pole piece 124, there is no objectionable actuation noise from the actuator 106.

At this time, manual force applied against the push button 84 by the thumb on a hand of the operator is ineffective to cause movement of the actuator rod 86. This is because the blocking member 104 is held against movement under the combined influence of force provided by the biasing spring 120 and a relatively strong force provided by the magnetic field from the energized coil 130. Therefore, the operator of the vehicle can not effect movement of the vehicle shift lever assembly 20 from the park position of Fig. 1 until the vehicle brakes are actuated.

Upon actuation of the vehicle brakes, the positive input over the lead 152 to the AND gate 148 is interrupted. Interruption of the positive input over the lead 152 to the AND gate 148 interrupts the positive output from the AND gate to the OR gate and results in de-energization of the coil 130.

Once the coil 130 has been de-energized, the pushbutton 84 can be readily actuated against the influence of the biasing spring 120. Actuation of the push button 84 moves both the actuator rod 86 and detent member 58 downward toward the axis 48 about which the vehicle shift lever assembly 20 is pivotal.

As the detent member 58 moves away from the park detent location 64, the blocking member 104 is moved with the detent member. There is no relative movement between the blocking member 104 and the detent member 58 so that there is minimal friction force to oppose movement of the detent member. As the detent member 58 and blocking member 104 move downward together, the detent member clears a projection 180 disposed between the park detent location 64 and reverse detent location 66. As this occurs, the vehicle shift lever assembly 20 can move to the intermediate position shown in Fig. 5. At this time, the armature 126 in the actuator 106 is spaced from the pole piece 124 in the position illustrated in Fig. 3.

When the shift lever assembly 20 has been moved through the intermediate position of Fig. 5 to the reverse position of Fig. 6, the push button 84 is released. Releasing the push button 84 interrupts the transmission of force from the detent member 58 through the blocking member 104 and actuator rod 108 to the armature 126. Therefore, the armature 126 is released for movement toward the pole piece 124 from the position illustrated in Fig. 3 toward the position illustrated in Fig. 2. At the same time, the detent member 58 moves into engagement with the detent plate 56 at the reverse detent location 66 (Fig. 6). The biasing spring 120 (Fig. 3) moves the armature 126 toward the pole piece 124 to maintain the blocking member 104 in engagement with the detent member 58.

When the detent member 58 is in the reverse detent location 66, the armature 126 is spaced from the pole piece 124 by a distance which is approximately equal to the thickness of the detent member 58 as measured along the longitudinal central axis 52 of the vehicle shift lever assembly 20. When the detent member 58 is in the reverse detent location 66 (Fig. 6), the force applied by the biasing spring 120 (Figs. 2 and 3) against the armature 126 is transmitted through the actuator rod 108 to the blocking member 104. The blocking member 104 presses the detent member 58 into engagement with the detent plate 56 at the detent location 66.

When the vehicle shift lever assembly 20 is to be moved from the reverse position (Fig. 6) to the forward drive position (Fig. 8), force is manually applied against the handle portion 38 of the vehicle shift lever assembly 20. As this occurs, the vehicle shift lever assembly 20 is pivoted in a clockwise direction about the axis 48 (Fig. 1). The detent member 58 moves to the neutral detent position 70 (Fig. 7). As the shift lever assembly 20 is moved from the reverse position to the neutral position, the detent member 58 moves upward (as viewed in Figs. 6 and 7) to engage the detent plate 56 at the neutral detent location 70.

As the vehicle shift lever assembly 20 moves from the reverse position of Fig. 6 to the neutral position of Fig. 7, the blocking member 104 moves upward (as viewed in Figs. 6 and 7) through a relatively short distance. The relatively short distance which the blocking member 104 moves upward as the shift lever assembly 20 moves from the reverse position (Fig. 6) to the neutral position (Fig. 7), results in an upper end portion of the blocking member moving into alignment with the reverse detent location, in the manner illustrated schematically in Fig. 7.

At this time, the armature 126 will have moved into engagement with the pole piece 124 (Fig. 2) under the influence of the biasing spring 120. Therefore, the pole piece 124 will block further upward movement of the blocking member 104. This results in the detent member 58 moving away from the blocking member to the neutral detent location 70 (Fig. 7) The biasing spring 120 will be effective to hold the armature 126 in engagement with the pole piece 124 while the detent member 58 is in the neutral detent position 70 and the coil 130 is de-energized.

When the vehicle shift lever assembly 20 is to be moved from the neutral position of Fig. 7 to the drive position of Fig. 8, force is applied against the handle portion 38 of the vehicle shift lever assembly 20 (Fig. 1). This force causes the vehicle shift lever assembly 20 to pivot in a clockwise direction about the axis 48 from the neutral position of Fig. 7 to the drive position of Fig. 8. When the vehicle shift lever assembly 20 is moved to the drive position of Fig. 8, the detent member 58 is disposed in engagement with the detent plate 56 at the drive detent location 74.

The blocking member 104 and actuator 106 are connected with the vehicle shift lever assembly 20 and move with the vehicle shift lever assembly 20 about the axis 48 (Fig. 1). However, the armature 126 (Fig. 2) is in engagement with the pole piece 124 when the vehicle shift lever assembly 20 is in the neutral position of Fig. 7. Therefore, when the vehicle shift lever assembly 20 moves from the neutral position of Fig. 7 to the drive position of Fig. 8, the position of the blocking member 104 along the longitudinal central axis 52 of the vehicle shift lever assembly 20 does not change. This results in the blocking member 104 being disposed beneath the blocking surface 170 when the vehicle shift lever assembly 20 is in the drive position of Fig. 8. Therefore, manual actuation of the push button 84 (Fig. 1) with the vehicle shift lever assembly 20 in the drive position of Fig. 8 results in the detent member 58 moving downward into engagement with the blocking surface 170. At this time, the detent member is spaced from the blocking member 104.

When the operator wishes to move the vehicle shift lever assembly 20 from the drive position of Fig. 8 to the reverse position of Fig. 6, the operator may actuate the push button 84. Actuation of the push button 84 moves the actuator rod 86 downward (as viewed in Fig. 1) along the central axis 52 of the vehicle shift lever assembly 20. This downward movement of the actuator rod 86 and detent member 58 is interrupted when the detent member 58 moves into engagement with the blocking surface 170 on the detent plate 56.

When the detent member 58 moves into engagement with the blocking surface 170 (Fig. 8), the blocking member 104 is disposed below the detent member. If the vehicle is traveling at a speed which is less than the predetermined speed, for example two miles per hour, the coil 130 in the actuator 106 (Fig. 2) is de-energized. However, if the vehicle is traveling at a speed which is over the predetermined speed, that is greater than six miles per hour, the output from the OR gate 160 (Fig. 4) is effective to energize the coil 130.

Since the armature 126 is disposed in engagement with the pole piece 124, energization of the coil 130 is ineffective to move the armature 126 relative to the pole piece 124. Energization of the coil 130 merely increases the force with which the armature 126 is pressed against the pole piece 124.

The operator then manually applies force to the handle portion 38 of the vehicle shift lever assembly 20 while continuing to actuate the pushbutton to pivot the shift lever assembly in a counterclockwise direction about the axis 48 (Fig. 1). As this occurs, the detent member 58 will slide along the blocking surface 170 and remain spaced from the blocking member 104. When the detent member 58 is moved past the left (as viewed in Figs. 6 and 8) edge of the blocking surface 170, the detent member 58 will move downward into engagement with the blocking member 104. Thus, the force manually applied against the pushbutton 84 is transmitted through the actuator rod 86 (Fig. 1) to the detent member 58 to move the detent member downward into engagement with the blocking member 104.

If the vehicle is traveling at a speed which is less than the predetermined speed, for example, two miles per hour, the coil 130 is de-energized and the force 136 transmitted from the detent member 58 to the blocking member 104 causes the armature 126 to move away from the pole piece 124 to the position illustrated in Fig. 3. Continued leftward (as viewed in Fig. 8) movement of the vehicle shift lever assembly 20 will result in the detent member 58 moving into alignment with the reverse detent location 66. The manual force applied against the pushbutton 84 is then released and the detent member 58 moves into engagement with the detent plate 56 at the reverse detent position (Fig. 6).

If the vehicle is travelling at a speed which is above the predetermined when the shift lever assembly 20 is moved from the drive position (Fig. 8) toward the reverse position (Fig. 6), the coil 130 is energized. When the shift lever assembly 20 is moved in a counterclockwise direction about the axis 48 (Fig. 1) from the drive position of Fig. 8 toward the reverse position of Fig. 6, the manual force applied against the pushbutton 84 results in the detent member 58 being pressed against the blocking surface 170. When the detent member 58 has moved clear of the left (as viewed in Fig. 8) edge of the blocking surface 170, the manual force applied against the pushbutton 84 will move the detent member 58 downward into engagement with the blocking member 104.

At this time, the coil 130 is energized and the upper edge portion of the blocking member 104 is spaced the same distance from the axis 48 (Fig. 1) about which the shift lever assembly 20 pivots as is the reverse detent location 66. Since the blocking member 104 is aligned with the detent location 66, the detent member 58 is blocked against movement into the reverse detent location.

When the shift lever assembly 20 has been moved to a position just past the neutral position of Fig. 7 and just short of the reverse position of Fig. 6 while the vehicle is being operated at a speed above the predetermined speed, the detent member 58 will engage the detent plate 56 at a location adjacent to and disposed to the right (as viewed in Fig. 6) of the reverse detent location 66. The blocking member 104 is firmly held in a position blocking movement of the detent member 58 into alignment with the reverse detent location 66 by the combined influence of the energized coil 130 and the biasing spring 120. Thus, the detent member 58 can not be moved downward (as viewed in Fig. 6) under the influence of force applied against the pushbutton 84 by the operator of the vehicle. The blocking member 104 remains in a raised (as viewed in Fig. 6) position blocking movement of the detent member 58 into the reverse detent location 66.

Assuming that the operator of the vehicle has attempted to move the vehicle shift lever assembly 20 to the reverse position while the vehicle is traveling at a speed above the predetermined speed, the blocking member 104 prevents movement of the detent member 58 to the reverse detent location 66. However, as soon as the vehicle speed drops below the predetermined speed, the positive input over the lead 174 to the OR gate 160 (Fig. 4) is interrupted. This results in de-energization of the coil 130.

As soon as the coil 130 is de-energized, the force transmitted from the pushbutton 84 through the actuator rod 86 to the detent member 58 can overcome the force applied against the armature 126 (Fig. 2) by the spring 120.

This results in the armature 126 moving away from the pole piece 124. As the armature 126 moves away from the pole piece 124, the actuator rod 108 and blocking member 104 move downward (as viewed in Figs. 1 and 2). As this occurs, the blocking member moves to a position in which it is ineffective to block movement of the detent member 58 to the reverse detent location 66. Therefore, the counterclockwise force applied to the handle portion 38 of the vehicle shift lever assembly 20 by the operator of the vehicle is effective to pivot the shift lever assembly to the reverse position of Fig. 6.

In the embodiment of the invention illustrated in Figs. 1-9, the detent member 58 moves into engagement with the detent plate 56 at the detent locations 64, 66, 70, 74, 78 and 80 and also engages the blocking member 104.

However, if desired, the detent member which engages the blocking member 104 could be separate from a detent member which moves into engagement with the detent plate 56 at the detent locations 64, 66, 70, 74, 78 and 80. Thus, the detent member which engages the blocking member 104 to prevent manual movement of the shift lever assembly 20 out of the park position prior to actuation of the vehicle brakes and which prevents manual movement of the vehicle shift lever assembly from the drive position to the reverse position when the vehicle is being operated at a speed above the predetermined speed could be separate from a detent member which engages the park, reverse, neutral, and drive detent locations. If this was done, the detent member which engages the blocking member 104 could be spaced from the detent plate 56. However, it is believed that it may be advantageous to perform the functions of cooperating with the blocking member 104 and the detent locations 64, 66, 70, 74, 78 and 80 with a single detent member in order to simplify the construction and operation of the vehicle shift lever assembly 20.

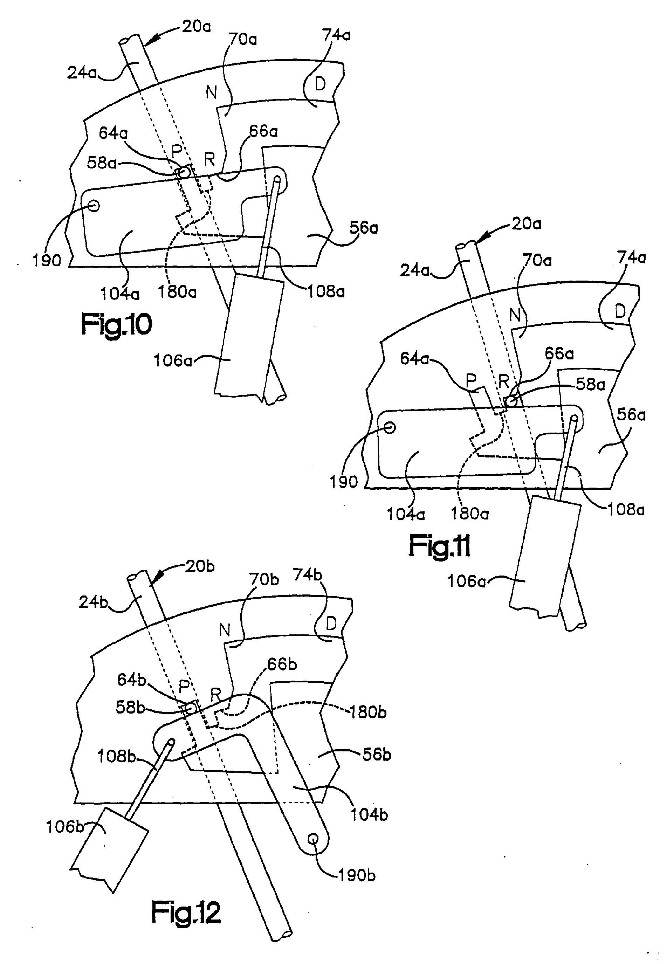

In the embodiment of the invention illustrated in Figs. 1-9, the blocking member 104 and detent member 58 are movable along a common path of movement which extends parallel to the central axis 52 of the vehicle shift lever assembly 20. In the embodiment of the invention illustrated in Figs. 10 and 11, the blocking member is pivotal about an axis which extends parallel to the axis 48 about which the vehicle shift lever assembly 20 is movable. Since the embodiment of the invention illustrated in Figs. 10 and 11 is generally similar to the embodiment of the invention illustrated in Figs. 1-9, similar components will be designated by similar numerals, the suffix letter "a" being associated with the numerals of Figs. 10 and 11 to avoid confusion.

A vehicle shift lever assembly 20a (Figs. 10 and 11) includes a lever portion 24a. A detent member 58a is fixedly connected to an actuator rod (not shown) corresponding to the actuator rod 86. The actuator rod to which the detent member 58a is fixedly connected is movable relative to the lever portion 24a of the vehicle shift lever assembly 20a in a direction which extends parallel to a longitudinal central axis of the vehicle shift lever assembly.

A detent plate 56a is effective to form a plurality of detent locations, designated by the letters P, R, N and D in Figs. 10 and 11, which are engaged by the detent member 58a. A park detent location 64a is separated from a reverse detent location 66a by a projection 180a. In addition, the detent plate 56a defines a neutral detent location 70a and a drive detent location 74a. An actuator 106a has an actuator rod 108a which is connected with a blocking member 104a. The blocking member 104a is pivotally connected to the detent plate 56a at a pivot connection 190.

When the shift lever assembly 20a is in the park position illustrated in Fig. 10 with the vehicle ignition turned ON and the vehicle brakes in an actuated condition, force applied against a pushbutton on a handle portion (not shown) of the vehicle shift lever assembly 20a is effective to move the detent member 58a downward along the lever portion 24a of the vehicle shift lever assembly 20a. As this occurs, force applied by the detent member 58a against the blocking member 104a is effective to pivot the blocking member about the connection 190.

An armature (not shown) in the actuator 106a moves away from a pole piece against the influence of a biasing spring (not shown) as the blocking member 104a pivots about the connection 190. When the blocking member 104a has been pivoted in a clockwise direction about the connection 190 through a distance sufficient to enable the detent member 58a to clear the projection 180a, rightward (as viewed in Fig. 10) force applied to the handle portion of the vehicle shift lever assembly 20 is effective to pivot the vehicle shift lever in a clockwise direction to the position illustrated in Fig. 11. As this occurs, the detent member 58a moves into engagement with the detent plate 56a at the reverse detent location 66a.

If the vehicle brakes are in an unactuated condition, the coil (not shown) in the actuator 106a would be energized and the blocking member 104a would be held in the position illustrated in Fig. 10. This would prevent movement of the detent member 58a from the park detent location 64a until the vehicle brakes are actuated. As the vehicle brakes are actuated and the coil in the actuator 106 is de-energized, the force applied by the detent member 58a against the blocking member 104a is effective to pivot the blocking member to enable the detent member to move from the park detent location 64a of Fig. 10 to the reverse detent location 66a of Fig. 11.

When the detent member 58a has moved to the reverse detent location 66a, the coil in the actuator 106a, that is, the coil corresponding to the coil 130 of Figs. 2 and 3, is de-energized. Therefore, the blocking member 104a is urged upward, that is in a counterclockwise direction about the pivot connection 190, by the force applied against the armature in the actuator 106a by a biasing spring, corresponding to the biasing spring 120 of Figs. 2 and 3.

The detent member 58a can be moved from the reverse detent location 66a past the neutral detent location 70a to the drive detent location 74a by movement of the vehicle shift lever assembly 20a from the reverse position of Fig. 11 to the drive position. When the vehicle shift lever assembly 20a is in the drive position, the blocking member 104a is released for upward pivoting movement under the influence of the biasing spring in the actuator 106a. This moves the blocking member 104a from the position shown in Fig. 11 to the position shown in Fig. 10. At this time, the blocking member 104a blocks the reverse detent location 66a.

When the vehicle is traveling forward at a speed above a predetermined speed, for example, six miles per hour, the coil in the actuator 106a is energized. Energization of the coil in the actuator 106a is effective to hold the blocking member 104a in the position illustrated in Fig. 10 with the shift lever assembly 20a in the drive position. At this time, the detent member 58a is disposed in engagement with the detent plate 56a at the drive detent location 74a.

If the operator attempts to move the vehicle shift lever assembly 20a from the drive position to the reverse position while the vehicle is traveling forward at a speed above the predetermined speed, the detent member 58a will engage the blocking member 104a. Since the coil in the actuator 106a is energized, the force applied against the blocking member 104a by the detent member 58a will be ineffective to pivot the blocking member 104a in a clockwise direction about the pivot connection 190. This results in movement of the detent member 58a to the reverse detent location being blocked by the blocking member 104a.

As soon as the vehicle speed drops to a speed below the predetermined speed, the coil in the actuator 106a is de-energized. De-energization of the coil in the actuator 106a enables force transmitted from the detent member 58a to pivot the blocking member 104a about the connection 190 and to move to the reverse detent location 66a.

In the embodiment of the invention illustrated in Figs. 10 and 11, a single detent member 58a engages both the blocking member 104a and the detent plate 56a. If desired, a first detent member could be provided to engage the detent plate 56a and a second detent member could be provided to engage the blocking member 104a. Although it may be desired to have both the first and second detent members move along a longitudinal central axis of the vehicle shift lever assembly, only the first detent member, that is, the detent member which engages the detent plate 56a, may be movable along the central axis of the shift lever assembly.

In the embodiment of the invention illustrated in Figs. 10 and 11, the blocking member 104a has a generally linear configuration. In the embodiment of the invention illustrated in Fig. 12, the blocking member has a generally L-shaped configuration. Since the embodiment of the invention illustrated in Fig. 12 is generally similar to the embodiment illustrated in Figs. 1-11, similar numerals will be utilized to designate similar components, the suffix letter "b" being added to the numerals of Fig. 12 to avoid confusion.

A vehicle shift lever assembly 20b includes a lever portion 24b. The vehicle shift lever assembly 20b includes a detent member 58b which is connected with and is movable axially along the lever portion 24b of the vehicle shift lever assembly 20b.

The detent member 58b cooperates with a detent plate 56b having the same construction as the detent plate 56 of Fig. 1. The detent plate 56b includes a park detent location 64b indicated by the letter "P" in Fig. 12. The detent plate 56b has a reverse detent location 66b designated by the letter "R" in Fig. 12. A projection 180b is disposed between the park detent location 64b and reverse detent location 66b. The detent plate 56b also defines a neutral detent location 70b designated by the letter "N". A drive detent location 74b is designated by the letter "D".

A blocking member 104b is pivotal about a connection 190b. An actuator 106b has an actuator rod 108b which is connected with the blocking member 104b. The actuator 106b has the same construction as the actuator 106 of Figs. 1-9.

When the vehicle brakes are in an unactuated condition, a coil in the actuator 106b is energized to maintain the blocking member 104b in a position blocking movement of the detent member 58b from the park detent location 64b. When the vehicle brakes are in an actuated condition with the ignition switch turned ON, force transmitted from the pushbutton (not shown) on a handle portion of the vehicle shift lever assembly 20b is transmitted by an actuator rod, corresponding to the actuator rod 86 of Fig. 1, to the detent member 58b. This force presses the detent member 58b against the blocking member 104b and pivots the blocking member in a counterclockwise direction about the pivot connection 190b. As the blocking member 104b is pivoted in a counterclockwise direction, a biasing spring, corresponding to the biasing spring 120 of Figs. 2 and 3, in the actuator 106b is compressed. At this time, the coil in the actuator 106b is de-energized.

Once the vehicle shift lever assembly 20 has been moved to a drive position in the manner previously described in conjunction with the embodiment of the invention illustrated in Figs. 1-9, the detent member 58b is disposed in engagement with the detent plate 56b at the drive detent location 74b. When the vehicle speed exceeds a predetermined speed, for example, six miles per hour, the coil in the actuator 106b is energized. Energization of the coil in the actuator 106b results in the blocking member 104b being held in the blocking position illustrated in Fig. 12. At this time, the blocking member 104b blocks movement of the detent member 58b from the drive detent location 74b to the reverse detent location 66b. Therefore, the vehicle shift lever assembly 20b can not be moved from the drive position to the reverse position when the vehicle is being operated at a speed above the predetermined speed.

When the operating speed of the vehicle is less than the predetermined speed, that is, less than six miles per hour in the foregoing example, the detent member 58b can be moved from the drive detent location 74b to the reverse detent location 66b. This is because when the vehicle is being operated at a speed which is less than the predetermined speed, the coil in the actuator 106b is de-energized. This enables the blocking member 104b to be pivoted in a counterclockwise direction above the connection 19Gb to enable the detent member 58b to move into engagement with the detent plate 56b at the reverse detent location 66b.

In the embodiments of the invention illustrated in Figs. 10-12, the blocking member 104a or 104b is pivotal about the connection 190 or connection 190b. However, it is contemplated that the blocking member may be movable along a linear path under the influence of force transmitted between blocking member and the detent member when the coil in the actuator 106a or 106b is de-energized. Thus, rather than using a pivot connection 190 or 190b to guide movement of the blocking member 104a or 104b, straight guide surfaces could be utilized to guide movement of the blocking member. These guide surfaces could be formed in linear slots in a plate or by linear guide rails. In such an embodiment of the invention, the armature in the actuator 106a or 106b would move relative to the pole piece along a path parallel to the linear guide surfaces. If desired, a pair of actuators could be connected with the blocking member.

In the embodiment of the invention illustrated in Figs. 1-12, the actuator 106 has an armature 126 which is urged toward the pole piece by the biasing spring 120. It is believed that this construction of the actuator may be preferred since it eliminates relative movement between the armature 126 and pole piece 124 when the coil 130 is energized. However, it is contemplated that the biasing spring 120 and armature 126 could cooperate with each other in such a manner as to have the biasing spring urge the armature away from the pole piece 124. If this was done, the blocking member 104 would be moved to a position in which it is ineffective to block movement of the detent member 58 whenever the coil 130 is in a de-energized condition. Upon energization of the coil 130, the blocking member 104 would be moved to a position blocking movement of the detent member.

The present invention relates to anew and improved apparatus which may have a feature which prevents manual movement of a shift lever assembly 20 out of a park position (Fig. 1) prior to actuation of vehicle brakes. The apparatus may also have a feature which prevents manual movement of the vehicle shift lever assembly 20 from a drive position (Fig. 8) to a reverse position (Fig. 6) when the vehicle is being operated at a speed above a predetermined speed. Although the two features may advantageously be utilized together, it is contemplated that each of these features may be utilized separately. Specifically, it is believed that the apparatus may be used to prevent movement of a vehicle shift lever assembly 20 from the drive position (Fig. 8) to the reverse position when the vehicle is being operated at a speed above a predetermined speed without being utilized to prevent movement of the vehicle shift lever assembly out of a park position (Fig. 1) prior to actuation of the vehicle brakes. Of course, the apparatus could be utilized to prevent movement of the vehicle shift lever assembly 20 out of the park position (Fig. 1) prior to actuation of the vehicle brakes without being used to prevent movement of the vehicle shift lever assembly from the drive position (Fig. 8) to the reverse position (Fig. 6) when the vehicle is being operated at a speed above the predetermined speed.

The apparatus may include an actuator 106 which is connected with a blocking member 104. When the vehicle shift lever assembly 20 is in the park position (Fig. 1) and the vehicle brakes are in an unactuated condition, the actuator 106 may be effective to hold the blocking member 104 in a position which prevents movement of the detent 58 from a park detent location 64. When the shift lever assembly 20 is in a drive position (Fig. 8) and the vehicle is being operated at a speed which is greater than a predetermined speed, the actuator 106 may hold the blocking member 104 in a position blocking movement of the detent 58 from a drive detent location 74 to a reverse detent location 66.

## Claims

1. An apparatus which prevents manual movement of a manually engagable vehicle shift lever out of a park position prior to actuation of vehicle brakes and which prevents manual movement of the vehicle shift lever from a drive position to a reverse position when the vehicle is being operated at a speed above a predetermined speed, said apparatus comprising:
a detent which is in a park detent location when the vehicle shift lever is in the park position, which is in a reverse detent location when the vehicle shift lever is in the reverse position, and which is in a drive detent location when the vehicle shift lever is in the drive position;
a blocking member; and,
an actuator which is connected with said blocking member and holds said blocking member in a position blocking movement of said detent from the park detent location when the shift lever is in the park position and the vehicle brakes are in an unactuated condition and which holds said blocking member in a position blocking movement of said detent from the drive detent location to the reverse detent location when the shift lever is in the drive position and the vehicle is being operated at a speed greater than the predetermined speed.

2. An apparatus according to claim 1, wherein said actuator is connected with said detent and moves with said detent during movement of said detent between the park detent location, reverse detent location, and drive detent location.

3. An apparatus according to claim 1, wherein said detent is movable relative to said actuator during movement of said detent between the park detent location, reverse detent location, and drive detent location.

4. An apparatus according to claim 1, wherein said actuator is connected with the shift lever and is movable with the shift lever during manual movement of the shift lever between the park, reverse and drive positions.

5. An apparatus according to claim 1, wherein said blocking member is connected with the shift lever and is movable with the shift lever during manual movement of the shift lever between the-park, reverse, and drive positions.

6. An apparatus according to any preceding claim, wherein said detent includes a surface which engages said blocking member and applies force against said blocking member to move said blocking member relative to the park detent location during manual movement of the shift lever from the park position, said surface of said detent engages said blocking member and applies force against said blocking member to move said blocking member relative to the reverse detent location during manual movement of the shift lever to the reverse detent position.

7. An apparatus according to any preceding claim, wherein said actuator includes a spring which continuously urges said blocking member toward said detent when the shift lever is in the park, reverse or drive positions.

8. An apparatus according to claim 7, wherein said blocking member is movable against force provided by said spring under the influence of manual force transmitted to said blocking member through said detent when said detent is in the park detent location and the vehicle brakes are actuated, said blocking member being movable against force provided by said spring under the influence of manual force transmitted to said blocking member through said detent to said blocking member when the vehicle shift lever is manually moved from the drive position to the reverse position while the vehicle is being operated at a speed below the predetermined speed.

9. An apparatus according to claim 8, wherein said actuator includes an electromagnet which is energizable to prevent movement of said blocking member under the influence of manual force transmitted to said blocking member through said detent when said detent is in the park detent location and the vehicle brakes are unactuated, said electromagnet being energizable to prevent movement of said blocking member under the influence of manual force transmitted to said blocking member through said detent when the vehicle is being operated at a speed above the predetermined speed.

10. An apparatus according to claim 1, wherein said actuator includes an electromagnet which is energized to prevent movement of said blocking member from the position blocking movement of said detent from the park detent location when the shift lever is in the park position and the vehicle brakes are in an unactuated condition, said electromagnet being energized to prevent movement of said blocking member from the position blocking movement of said detent from the drive detent location to the reverse detent location when the vehicle is being operated at a speed greater than the predetermined speed.

11. An apparatus according to claim 10, wherein said blocking member is connected with the shift lever and is movable with the shift lever during manual movement of the shift lever between the park, reverse, and drive positions.

12. An apparatus according to claim 11, wherein said actuator is connected with the shift lever and is movable with the shift lever during manual movement of the shift lever between the park, reverse, and drive positions.

13. An apparatus according to claim 1, wherein said actuator includes a pole piece, an armature which is connected with said blocking member, a coil which is energizable to provide a magnetic field which urges said armature toward said pole piece, and a spring which continuously urges said armature toward said pole piece, said armature being movable away from said pole piece against force transmitted from said spring to said armature under the influence of manual force transmitted through said detent and blocking member to said armature when said coil is in a de-energized condition, said armature being held against movement away from said pole piece under the influence of manual force transmitted through said detent and blocking member to said armature when said coil is in an energized condition.

14. An apparatus according to claim 13, further including actuator control circuitry connected with said coil, said control circuitry being effective to energize said coil when the vehicle shift lever is in the park position and the vehicle brakes are in the unactuated condition, said control circuitry being effective to energize said coil when the vehicle is being operated at a speed above the predetermined speed.

15. An apparatus according to claim 13, wherein said blocking member and shift lever are pivotal about parallel axes.

16. An apparatus according to claim 13, wherein said blocking member is movable along a path which extends parallel to a longitudinal central axis of the shift lever.

17. An apparatus according to claim 1, further including a detent plate which at least partially defines the park, reverse, and drive detent locations, said detent member being disposed in engagement with said detent plate when said detent member is in the park, reverse, and drive detent locations.

18. An apparatus according to claim 17, wherein said detent plate includes a blocking surface which is spaced from said drive and reverse detent locations, said detent being engagable with said blocking surface during at least a portion of the movement of said detent between the drive and reverse detent locations.

19. An apparatus according to claim 1, wherein said detent is spaced from said blocking member when said detent is in the drive detent location, said detent being disposed in engagement with said blocking member when said detent is in the park and reverse detent locations.

20. An apparatus according to claim 1, wherein said actuator is operable to continuously urge said blocking member toward said detent during movement of said detent between the park, reverse, and drive detent locations.

21. An apparatus for use with a manually engagable vehicle shift lever which is manually movable between a drive position and a reverse position during operation of a vehicle, said apparatus comprising:
a surface connected with the shift lever and movable between a plurality of locations upon manual movement of the shift lever between the drive position and the reverse position;
a movable blocking element; and
an actuator which is connected with said blocking element and is effective to maintain said blocking element in a position in which said blocking element is effective to block movement of said surface from a location corresponding to the drive position of the shift lever to a location corresponding to the reverse position of the shift lever when the vehicle is moving at a speed above a predetermined speed, said actuator being connected with said surface and being movable with said surface during movement of said surface between the location corresponding drive position of the shift lever and the position corresponding to the reverse position of the shift lever.

22. An apparatus according to claim 21, wherein said blocking element is connected with the shift lever and is movable with the shift lever during manual movement of the shift lever between the drive position and the reverse position.

23. An apparatus according to claim 21, wherein said actuator is connected with the shift lever and is movable with the shift lever during manual movement of the shift lever between the drive position and the reverse position.

24. An apparatus according to claim 21, wherein said blocking element is movable relative to the shift lever during manual movement of the shift lever between the drive position and the reverse position.

25. An apparatus according to claim 24, wherein at least a portion of said actuator is movable relative to the shift lever during manual movement of the shift lever between the drive position and the reverse position.

26. An apparatus according to claim 21, wherein said surface engages said blocking element and applies force against said blocking element to move said blocking element from a first position to a second position during manual movement of the shift lever from the drive position to the reverse position and movement of said surface from the location corresponding to the drive position of said shift lever to the location corresponding to the reverse position of the shift lever while the vehicle is moving at a speed which is less than the predetermined speed.

27. An apparatus according to claim 26, wherein said actuator includes spring means for continuously urging said blocking element toward the first position, said blocking element being movable from the first position to the second position against the influence of force transmitted from said spring means to said blocking element and under the influence of force transmitted from said surface to said blocking element.

28. An apparatus according to claim 27, wherein said actuator includes an electromagnet which is energizable to maintain said blocking element in the first position when the shift lever is in the drive position and the vehicle is moving at a speed above the predetermined speed.

29. An apparatus according to claim 21, wherein said actuator includes an electromagnet which is continuously energized during movement of the vehicle at a speed above the predetermined speed to hold said blocking element in a position in which said blocking element is effective to block movement of said surface from the location corresponding to the drive position of the shift lever to the location corresponding to the reverse position of the shift lever.

30. An apparatus according to claim 21, wherein said surface is movable between a location corresponding to a park position to the shift lever and the location corresponding to the drive position of the shift lever upon manual movement of the shift lever between the park position and the drive position, said actuator being effective to maintain said blocking element in a position in which said blocking element is effective to block movement of said surface from the location corresponding to the park position of the shift lever to the location corresponding to the drive position of the shift lever when vehicle brakes are in an unactuated condition.

31. An apparatus according to claim 30, wherein said blocking element is connected with the shift lever and is movable with the shift lever during manual movement of the shift lever between the park, reverse, and drive positions.

32. An apparatus according to claim 31, wherein said actuator is connected with the shift lever and is movable with the shift lever during manual movement of the shift lever between the park, reverse, and drive positions.

33. An apparatus according to claim 30, wherein said blocking element is movable relative to the shift lever during manual movement of the shift lever between the park and reverse positions and during manual movement of the shift lever between the park and drive positions.

34. An apparatus according to claim 21, wherein said surface engages said blocking element and applies force against said blocking element to move said blocking element from a first position to a second position during movement of the shift lever from the park position to the drive position and movement of said surface from the location corresponding to the park position of the shift lever to the location corresponding to the drive position of the shift lever.

35. An apparatus according to claim 34, wherein said actuator includes spring means for continuously urging said blocking element toward the first position, said blocking element being movable from the first position to the second position against the influence of force transmitted from said spring means to said blocking element and under the influence of force transmitted from said surface to said blocking element.

36. An apparatus according to claim 35, wherein said actuator includes an electromagnet which is energizable to maintain said blocking element in the first position when the shift lever is in the park position and the vehicle brakes are in an unactuated condition.

37. An apparatus according to claim 30, wherein said actuator includes an electromagnet which is energized when the vehicle brakes are in an unactuated condition when the shift lever is in the park position and a vehicle ignition is actuated to maintain said blocking element in a position in which said blocking element is effective to block movement of said surface from the location corresponding to the position of the shift lever to the location corresponding to the drive position of the shift lever.

38. An apparatus which prevents manual movement of a vehicle shift lever from a drive position to a reverse position while the vehicle is being operated at a speed above a predetermined speed, said apparatus comprising:
a detent which is in a reverse detent location when the vehicle shift lever is in the reverse position and which is in a drive detent location when the vehicle shift lever is in a drive position;
a blocking member; and
an actuator which is connected with said blocking member and holds said blocking member in a position blocking movement of said detent from the drive detent location to the reverse detent location when the shift lever is in the drive position and the vehicle is being operated at a speed greater than the predetermined speed, said blocking member being movable under the influence of force transmitted from said detent to said blocking member during at least a portion of movement of said detent from the drive detent location to the reverse detent location while the vehicle is being operated at a speed less than the predetermined speed.

39. An apparatus according to claim 38, wherein said detent is in a park detent location when the vehicle shift lever is in a park position, said actuator holds said blocking member in a position blocking movement of said detent from the park detent location when the shift lever is in the park position and vehicle brakes are in an unactuated condition.

40. An apparatus according to claim 39, wherein said blocking member is movable under the influence of force transmitted from said detent to said blocking member during at least a portion of movement of said detent from the park detent location with the vehicle brakes in an actuated condition.

41. An apparatus according to claim 40, wherein said actuator is connected with said detent and is movable with said detent during movement of said detent between the park, reverse and drive detent locations.

42. An apparatus according to claim 38, wherein said actuator includes a pole piece, an armature which is connected with said blocking member and is movable relative to said pole piece, a coil which is energizable to provide a magnetic field which urges said armature toward said pole piece, and a spring which continuously urges said armature toward said pole piece, said armature being movable away from said pole piece against force transmitted from said spring to said armature under the influence of manual force transmitted through said detent and blocking member when said coil is in a de-energized condition, said armature being held against movement away from said pole piece under the influence of manual force transmitted through said detent to said blocking member and said armature when said coil is in an energized condition.

43. An apparatus according to claim 42, further including actuator control circuitry connected with said coil, said control circuitry being effective to energize said coil when the vehicle is being operated at a speed above the predetermined speed.

44. An apparatus according to claim 43, wherein said blocking member and shift lever are pivotal about parallel axes.

45. An apparatus according to claim 43, wherein said blocking member is movable along a path which extends parallel to a longitudinal central axis of the shift lever.

46. An apparatus according to claim 43, wherein said detent, blocking member and actuator are connected with the shift lever and are movable with the shift lever.

47. An apparatus according to claim 38, wherein said actuator includes a pole piece, an armature which is connected with said blocking member and is movable relative to said pole piece, a coil which is energized when the vehicle is being operated at a speed above the predetermined speed to provide a magnetic field which urges said armature toward said pole piece to prevent movement of said blocking member under the influence of force transmitted to the blocking member from said detent, said coil being de-energized when the vehicle is travelling at a speed which is less than the predetermined speed, and a spring which urges said armature toward said pole piece when said coil is de-energized, said armature being movable away from said pole piece against the influence of said spring under the influence of force transmitted from said detent to said blocking member while said coil is de-energized.

48. An apparatus according to claim 38, further including a detent plate which at least partially defines the reverse and drive detent locations, said detent member being disposed in engagement with said detent plate when said detent member is in the reverse and drive detent locations.

49. An apparatus according to claim 48, wherein said detent plate includes a blocking surface which is spaced from said drive and reverse detent locations, said detent being engagable with said blocking surface during at least a portion of the movement of said detent between the drive and reverse detent locations.

50. An apparatus according to claim 38, wherein said detent is spaced from said blocking member when said detent is in the drive detent location, said detent being disposed in engagement with said blocking member when said detent is in the reverse detent location.

51. An apparatus according to claim 38, wherein said actuator is operable to continuously urge said blocking member toward said detent during movement of said detent between the reverse and drive detent locations.

52. An apparatus which prevents manual movement of a vehicle shift lever from a drive position to a reverse position while the vehicle is being operated at a speed above a predetermined speed, said apparatus comprising:
a force transmitting surface which is connected with the vehicle shift lever and is movable with the vehicle shift lever, said force transmitting surface being in a first location when the vehicle shift lever is in the reverse position and in a second location when the vehicle shift lever is in the drive position;
a blocking member; and
an actuator which is connected with said blocking member and holds said blocking member in a position blocking movement of said force transmitting surface from the second location to the first location when the vehicle shift lever is the drive position and the vehicle is being operated at a speed greater than the predetermined speed, said actuator includes a pole piece, an armature which is connected with said blocking member and is movable relative to said pole piece, a coil which is energized when the vehicle is being operated at a speed above the predetermined speed to provide a magnetic field which urges said armature toward said pole piece to prevent movement of said blocking member from a position blocking movement of said force transmitting surface from the second location to the first location, said coil being de-energized when the vehicle is travelling at a speed which is less than the predetermined speed, and a spring which urges said armature toward said pole piece when said coil is de-energized, said armature being movable away from said pole piece against the influence of said spring while said coil is de-energized.

53. An apparatus according to claim 52, wherein said force transmitting surface is a third location when the vehicle shift lever is in a park position, said coil is energized when the vehicle shift lever is in the park position and vehicle brakes are in an unactuated condition to provide a magnetic field which urges said armature toward said pole piece to prevent movement of said blocking member from a position blocking movement of said force transmitting surface from the third location when the vehicle shift lever is in the park position and the vehicle brakes are in an unactuated condition.

54. An apparatus according to claim 53, wherein said actuator is connected with the vehicle shift lever and is movable with the vehicle shift lever during movement of the vehicle shift lever between the park, drive, and reverse positions.

55. An apparatus according to claim 53, wherein said blocking member is movable from a position blocking movement of said force transmitting surface from the second location to the first location under the influence of force transmitted from said force transmitting surface to said blocking member when said coil is de-energized and the vehicle is travelling at a speed which is less than the predetermined speed.
